(19) **Europäisches Patentamt**
**European Patent Office**
**Office européen des brevets**

(11) **EP 2 779 479 B1**

(12) **EUROPEAN PATENT SPECIFICATION**

(45) Date of publication and mention
of the grant of the patent:
**12.05.2021 Bulletin 2021/19**

(51) Int Cl.:
***H04B 7/155*** (2006.01)

(21) Application number: **14159437.4**

(22) Date of filing: **13.03.2014**

(54) **Method and apparatus to control interference in a relay node**

Verfahren und Vorrichtung zur Steuerung der Interferenz in einem Relaisknoten

Procédé et appareil pour contrôler une interférence dans un noeud de relais

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2013 US 201361778718 P
04.06.2013 KR 20130063917
23.01.2014 KR 20140008318**

(43) Date of publication of application:
**17.09.2014 Bulletin 2014/38**

(73) Proprietors:
• **Samsung Electronics Co., Ltd.
Suwon-si Gyeonggi-do 443-742 (KR)**
• **Cornell University
Ithaca, NY 14850 (US)**

(72) Inventors:
• **Shin, Won-Jae
446-712 Gyeonggi-do (KR)**

• **Issa, Ibrahim
Ithaca, NY 14853 (US)**
• **Fong, Silas L.
Ithaca, NY 14853 (US)**
• **Avestimehr, Salman A.
Ithaca, NY 14853 (US)**
• **Noh, Won Jong
446-712 Gyeonggi-do (KR)**
• **Lim, Jong Bu
446-712 Gyeonggi-do (KR)**
• **Jang, Kyung Hun
446-712 Gyeonggi-do (KR)**

(74) Representative: **Grootscholten, Johannes A.M. et
al
Arnold & Siedsma
Bezuidenhoutseweg 57
2594 AC The Hague (NL)**

(56) References cited:
**EP-A1- 2 101 528    EP-A1- 2 434 660
EP-A2- 2 161 853**

**Description**

**BACKGROUND**

1. Field

The following description relates to a method and apparatus controlling interference in a multi-hop network, and a relay node and a node pair using the method.

2. Description of Related Art

A communications system is a collection of individual communications networks, transmission systems, relay stations, tributary stations, and data terminal equipment (DTE) usually capable of interconnection and interoperation to form an integrated whole. However, only 1% of mobile devices or stand-alone electronic devices existing are connected to one another over a network. However, with the development of communication technologies and the trend toward unification through device integration, smart phones, sensor devices, and other communication devices form a large network. In addition, a large number of users of communication terminals use a various applications for content sharing, synchronization, outputting, and gaming using wireless connection between devices. To respond to an increased demand for connectivity, wireless access technologies may support a device-to-device (D2D) communication beyond a cellular communication using an existing infrastructure.

The D2D communication in an early stage is based on a single-hop transmission technology, but is moving toward multiple hops. Additionally, in one communication scenario including a single source node and a single destination node, an existing relay technology generally employs a plurality of relay nodes to obtain a diversity gain or a multiplexing gain. However, it is expected that a plurality of node pairs will often transmit signals concurrently in a so-called multiple unicast multi-hop network. Accordingly, a need exists to control interference between a plurality of node pairs and a plurality of relay nodes.

Publications EP2434660A1 and EP2161853A2, acknowledged as prior art, present methods for limiting interference relative to which at least the characterizing features of the appended independent claims are novel and exhibit an inventive step.

**SUMMARY**

In accordance with the invention, there is provided a method to control interference in a relay node as defined in claim 1. The invention also relates to an apparatus to control interference as defined in claim 14. Advantageous embodiments of the invention are defined in the dependent

**BRIEF DESCRIPTION OF THE DRAWINGS**

These and/or other aspects will become apparent and more readily appreciated from the following description of the embodiments, taken in conjunction with the accompanying drawings in which:

FIG. 1 is a diagram illustrating an example of a multi-hop network and an alternating topology, in accord with an embodiment.
FIGS. 2A through 2C are diagrams illustrating examples of an interference control scheme in a multi-hop network including two node pairs, in accord with an embodiment.
FIGS. 3A and 3B are diagrams illustrating examples of an interference control scheme in a multi-hop network including three node pairs, in accord with an embodiment.
FIG. 4 is a diagram illustrating an example of an interference control scheme using classification of signals in a multi-hop network, in accord with an embodiment.
FIG. 5 is a flowchart illustrating an example of a method to control interference in relay nodes in a multi-hop network, in accord with an embodiment.
FIG. 6 is a flowchart illustrating an example of a method to control interference in node pairs in a multi-hop network, in accord with an embodiment.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

Multi-hop network and alternating topology

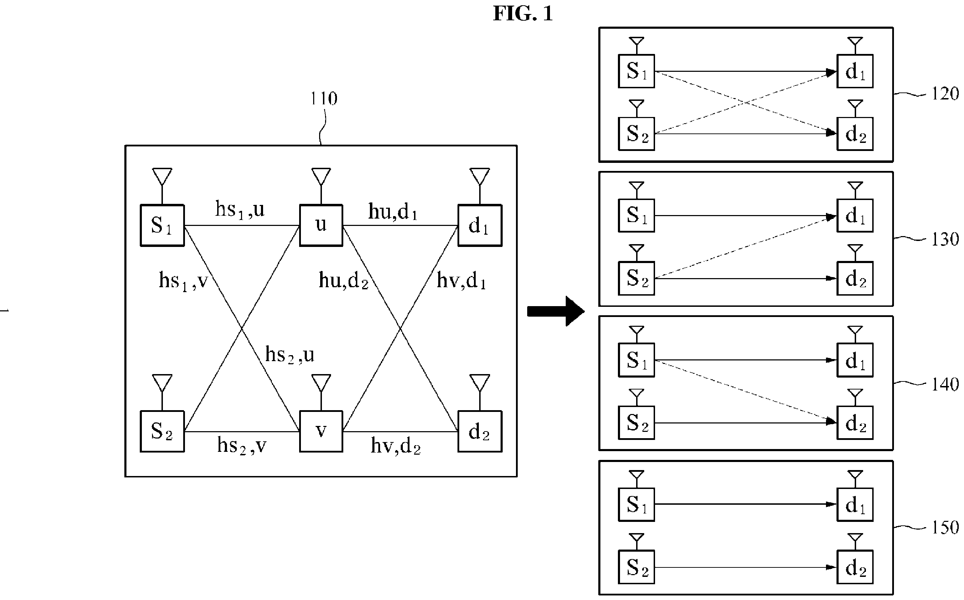

FIG. 1 illustrates an example of a multi-hop network and an alternating topology, in accord with an embodiment.

Referring to FIG. 1, a multi-hop network 110 is a two-hop network including source nodes, relay nodes, and destination nodes. For example, the multi-hop network 110 includes K source nodes, K relay nodes, and K destination nodes. In the multi-hop network 110, the source nodes transmit signals to the destination nodes through the relay nodes. In the multi-hop network 110, users of a cellular system may transmit data to base stations through relays. However, when signals are simultaneously transmitted by different node pairs, signals, symbols, or streams may interfere with each other during a multi-hop process, which may cause inter-stream interference. In accord with an embodiment, interference in the multi-hop network 110 is controlled based on cooperation between relay nodes and node pairs.

For instance, in the multi-hop network 110, $S_1$ and $S_2$ denote source nodes, u and v denote relay nodes, and $d_1$ and $d_2$ denote destination nodes. In an example in which the source node $S_1$ intends to transmit a symbol to the destination node $d_1$, the source node $S_1$ and the destination node $d_1$ pair up with one another. Each source node $S_i$ includes a message or symbol $W_i$ for each destination node $d_i$ ($i \in \{1, 2\}$) pairing up with each source node $S_i$. Additionally, $H_1$ denotes a channel matrix between source nodes and relay nodes, and is represented by

$$\mathbf{H_1} = \begin{bmatrix} h_{s_1,u} & h_{s_2,u} \\ h_{s_1,v} & h_{s_2,v} \end{bmatrix}.$$

$H_2$ denotes a channel matrix between relay nodes and destination nodes, and is represented by

$$\mathbf{H_2} = \begin{bmatrix} h_{u,d_1} & h_{v,d_1} \\ h_{u,d_2} & h_{v,d_2} \end{bmatrix}.$$ In an example, channel gains may be real-values, and may be drawn from a continuous distribution. In one example, the channel matrices are defined during communication between the node pairs and the relay nodes, and may be communicated to all the nodes.

In a time slot k, a transmission signal of the source node $S_i$ may be defined as $X_{i,k} \in \mathbb{R}$, and a transmission signal of a relay node r may be defined as $X_{r,k} \in \mathbb{R}$.

$Y_{r,k}$ denotes a signal received by the relay node r in the time slot k, as shown in Equation 1. $Y_{i,k}$ denotes a signal received from the destination node $d_i$ in the time slot k, as shown in Equation 2.

[Equation 1]

$$Y_{r,k} = h_{s_1,r} X_{1,k} + h_{s_2,r} X_{2,k} + Z_{r,k}, \qquad r \in \{u, v\}, k \in \mathbb{N},$$

[Equation 2]

$$Y_{i,k} = h_{u,d_i} X_{u,k} + h_{v,d_i} X_{v,k} + Z_{d_i,k}, \qquad i \in \{1,2\}, \ k \in \mathbb{N},$$

In Equations 1 and 2, $Z_{r,k}$, and $Z_{d_i,k}$, denote independently and identically distributed (i.i.d.) noise in the relay node r, and i.i.d noise in the destination node $d_i$, respectively, and follow a distribution of $N(0,1)$ Additionally, $Z_{r,k}$, and $Z_{d_i,k}$ are independent of messages $\{W_1, W_1, W_2\}$. $X^n$ is represented to define a random column vector $[X_1 \ X_1 \ ... \ X_n]^T$, and when $S \subseteq \{1, 2, ...., n\}$, $X^S$ is defined as $\{X_k | k \in S\}$.

In an example of an interference control scheme in the multi-hop network 110, relay nodes and node pairs control interference in the multi-hop network 110, based on mutual cooperation. In the interference control scheme in the multi-hop network 110, the relay nodes remove an interference channel by adjusting channel coefficients, and generate an alternating topology, for example, topologies 120 to 150 illustrated in FIG. 1. In one example, the alternating topology refers to a network between the source nodes and the destination nodes that is occur in turn repeatedly or alternate from an original network between the source nodes and the destination nodes due to a change in connectivity of the interference channel based on time or frequency.

The node pairs transmit and receive at least one symbol using the alternating topology. For example, when K node pairs simultaneously transmit N symbols, K source nodes transmit the N symbols to the relay nodes through M symbol transmission processes. In this example, M may be equal to or greater than N. Additionally, channel coefficients of the relay nodes may be adjusted differently for each of symbol transmission processes and, accordingly, an intensity of an interference signal received by K destination nodes from source nodes, which are not paired up with the K destination nodes, may be changed for each of the symbol transmission processes.

A change in the intensity of the interference signal indicates that an interference channel from source nodes to destination nodes may be changed for each of the symbol transmission processes. For example, in the topology 120, both, an interference channel from the source node $S_1$ to the destination node $d_2$, and an interference channel from the source node $S_2$ to the destination node $d_1$ exists. In the topology 130, an interference channel from the source node $S_2$ to the destination node $d_1$ does exist, but an interference channel from the source node $S_1$ to the destination node $d_2$ does not exist. In the topology 140, an interference channel from the source node $S_1$ to the destination node $d_2$ exists, but an interference channel from the source node $S_2$ to the destination node $d_1$ does not exist. In the topology 150, neither an interference channel from the source node $S_1$ to any of the destination nodes $d_1$ and $d_2$ nor an interference channel from the source node $S_2$ to any of the destination nodes $d_1$ and $d_2$ exists. The destination nodes $d_1$ and $d_2$ may decode the N symbols, based on the alternating topology, using signals received from the interference channels for each of the M symbol transmission processes.

Interference control scheme in multi-hop network including two node pairs

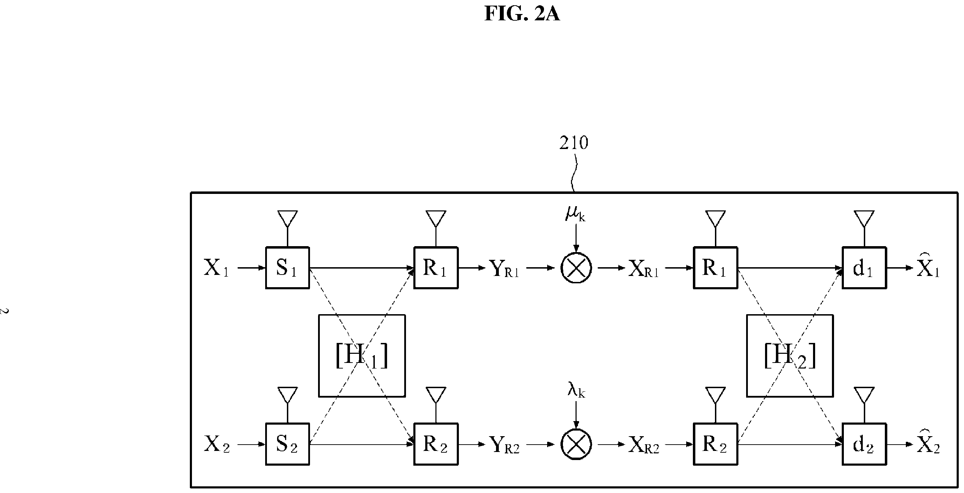

FIGS. 2A through 2C illustrate examples of an interference control scheme in a multi-hop network including two node pairs, in accord with an embodiment. Although the interference control scheme illustrates two node pairs, a person of ordinary skill in the relevant art will appreciate that additional node pairs may be implemented.

Referring to FIG. 2A, a multi-hop network 210 includes two source nodes $S_1$ and $S_2$, two destination nodes $d_1$ and $d_2$, and two relay nodes $R_1$ and $R_2$. In an interference control scheme in the multi-hop network 210, the relay nodes $R_1$ and $R_2$ and node pairs $S_1$, $S_2$, $d_1$ and $d_2$ may use a linear time-varying amplify-and-forward (AF) scheme. Additionally, in an example, the relay nodes $R_1$ and $R_2$ and the node pairs $S_1$, $S_2$, $d_1$ and $d_2$ may use a linear time-varying quantize-and-forward (QF) scheme, or a linear time-varying compute-and-forward (CF) scheme. In another example, the relay nodes $R_1$ and $R_2$ and the node pairs $S_1$, $S_2$, $d_1$ and $d_2$ may control interference in the multi-hop network 210, based on at least one frequency band, instead of at least one time slot. For example, in the interference control scheme in the multi-hop network 210, the relay nodes $R_1$ and $R_2$ and the node pairs $S_1$, $S_2$, $d_1$ and $d_2$ may use a linear frequency-selecting AF scheme, a linear frequency-selecting QF scheme, or a linear frequency-selecting CF scheme. The following description is provided based on the linear time-varying AF scheme.

In an example in which two node pairs $S_1$, $S_2$, $d_1$ and $d_2$ are provided, when the linear time-varying AF scheme is used in the relay nodes $R_1$ and $R_2$ and the node pairs $S_1$, $S_2$, $d_1$ and $d_2$, conditions (c-1), (c-2), and (c-3) may be assumed in the interference control scheme of the multi-hop network 210. In this example, the condition (c-1) may indicate that all channel gains are nonzero. The conditions (c-2) and (c-3) may be represented, as shown in Equation 3.

[Equation 3]

$$(\text{c-2}) \ \text{rank}(\mathbf{H_i}) = 2, \ i \in \{1,2\}.$$

$$(\text{c-3}) \ \text{rank}\left(\mathbf{H}^i \triangleq \begin{bmatrix} h_{u,d_1}h_{s_i,u} & h_{v,d_1}h_{s_i,v} \\ h_{u,d_2}h_{s_{\bar{i}},u} & h_{v,d_2}h_{s_{\bar{i}},v} \end{bmatrix}\right) = 2,$$

$$i \in \{1,2\}, \bar{i} = 3 - i.$$

Signals received by destination nodes in the time slot k may be represented, as shown in Equation 4.

[Equation 4]

$$\begin{bmatrix} Y_{1,k} \\ Y_{2,k} \end{bmatrix} = \mathbf{H_2} \begin{bmatrix} \mu_k & 0 \\ 0 & \lambda_k \end{bmatrix} \mathbf{H_1} \begin{bmatrix} X_{1,k-1} \\ X_{2,k-1} \end{bmatrix} + \begin{bmatrix} \tilde{Z}_{1,k} \\ \tilde{Z}_{2,k} \end{bmatrix}$$

$$= \mathbf{G}_k \begin{bmatrix} X_{1,k-1} \\ X_{2,k-1} \end{bmatrix} + \begin{bmatrix} \tilde{Z}_{1,k} \\ \tilde{Z}_{2,k} \end{bmatrix},$$

In Equation 4, $\mu_k$ and $\lambda_k$ denote channel coefficients or AF coefficients in the time slot k, and $\tilde{Z}_{i,k}$ denotes effective noise in the destination node $d_i$ ($i \in \{1,2\}$) and is represented by $\tilde{Z}_{i,k} = h_{u,di}\mu_k Z_{u,k-1} + h_{v,di}\lambda_k Z_{v,k-1} + h_{v,di}\lambda_k Z_{v,k-1} + Z_{di,k}$. Additionally, $G_k$ denotes an equivalent end-to-end channel matrix, and is represented by

$$\mathbf{G}_k = \mathbf{H_2} \begin{bmatrix} \mu_k & 0 \\ 0 & \lambda_k \end{bmatrix}$$

$G_k$ may also be represented, as shown in Equation 5.

[Equation 5]

$$\mathbf{G}_k =$$

$$\begin{bmatrix} \mu_k h_{u,d_1}h_{s_1,u} + \lambda_k h_{v,d_1}h_{s_1,v} & \mu_k h_{u,d_1}h_{s_2,u} + \lambda_k h_{v,d_1}h_{s_2,v} \\ \mu_k h_{u,d_2}h_{s_1,u} + \lambda_k h_{v,d_2}h_{s_1,v} & \mu_k h_{u,d_2}h_{s_2,u} + \lambda_k h_{v,d_2}h_{s_2,v} \end{bmatrix}$$

$$\mathbf{G}_k = \begin{bmatrix} \alpha_{1,k} & \beta_{1,k} \\ \alpha_{2,k} & \beta_{2,k} \end{bmatrix}$$

$G_k$ may be also represented by $\quad$ . $\tilde{Z}_{i,k}$ may be represented by $Z_{i,k}$ free of a tilde symbol $\sim$. Accordingly, the relay nodes $R_1$ and $R_2$ may relay at least one symbol from the source nodes $S_1$ and $S_2$ to the destination nodes $d_1$ and $d_2$, using the end-to-end channel matrix. The signals received at the destination nodes $d_1$ and $d_2$ in the time slot k may be represented, as shown in Equation 6.

[Equation 6]

$$Y_{i,k} = \alpha_{i,k}X_{1,k} + \beta_{i,k}X_{2,k} + Z_{i,k}, \quad k \in \{1,2,\ldots,n\}$$

In Equation 6, $Z_{i,k}$ depends on the channel coefficients and AF factors. Accordingly, a scale of the $Z_{i,k}$ may not be changed by a power constraint P.

In the interference control scheme in the multi-hop network 210, the relay nodes $R_1$ and $R_2$ and the node pairs $S_1$, $S_2$, $d_1$ and $d_2$ may use the linear time-varying AF scheme. When two symbols are to be transmitted from a node pair, the relay nodes $R_1$ and $R_2$ and the node pairs $S_1$, $S_2$, $d_1$ and $d_2$ may control interference through three symbol transmission processes.

In the linear time-varying AF scheme, each of subsets u and v correspond to a definite subset of a set of real numbers $\mathbb{R}$. In one example, the subset u includes channel coefficients of a first relay node

$$({\{\mu_k \in \mathcal{U}\}}_{k=1}^{n}),$$

and the subset *v* includes channel coefficients of a second relay node

$$({\{\lambda_k \in \mathcal{V}\}}_{k=1}^{n}).$$

The subset *u* is a set to $u = \{c\}$, and the subset v is a set to $v = \{0, -ch_{u,d_1}h_{s2,u}/h_{v,d_1}h_{s2,v_1}-ch_{u,d_2}h_{s1,u}/h_{v,d_2}h_{s1,v}\}$. A constant c is included in the set of real numbers $\mathbb{R}$, and is selected in the relay nodes to satisfy the power constraint P. The constant $c$ is represented by

$$c = \min\left\{\sqrt{1/(h_{s_1,u}^2 + h_{s_2,u}^2 + 1)}, l\sqrt{1/(h_{s_1,v}^2 + h_{s_2,v}^2 + 1)}\right\}$$

in which *l* indicates $\min\{|h_{v,d_1}hs_2,v/h_{u,d_1}hs_2,u|,|h_{v,d_2}h_{s1,v}/h_{u,d_2}h_{s1,u}|\}$. Based on the condition (c-1), denominators may be nonzero.

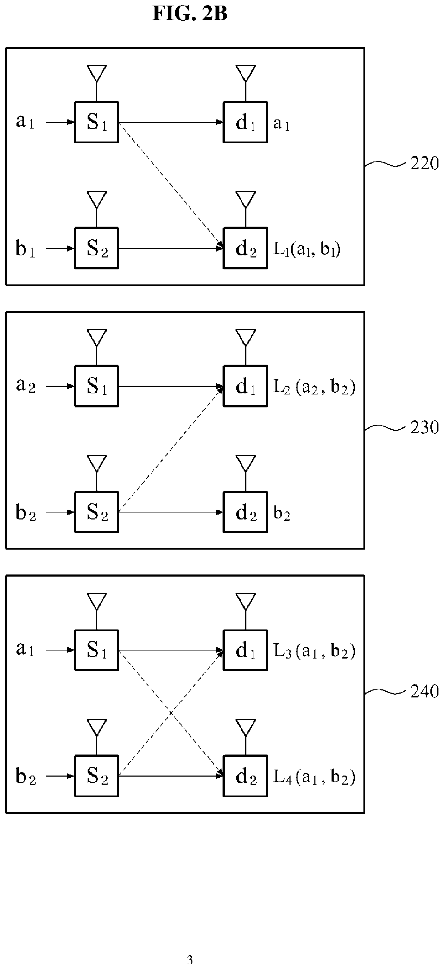

FIG. 2B illustrates symbol transmission processes 220, 230, and 240 in the multi-hop network 210, in accord with an embodiment.

Referring to FIG. 2B, in the symbol transmission process 220, relay nodes $R_1$ and $R_2$ receive symbols $a_1$ and $b_1$ from source nodes $S_1$ and $S_2$, respectively. $a_1^2$ and $b_1^2$ may be less than or equal to the power constraint P, $(a_1^2, b_1^2 \leq P)$. Additionally, the relay nodes $R_1$ and $R_2$ remove an interference channel between the source node $S_2$ and the destination node $d_1$, by adjusting channel coefficients. Accordingly, a channel coefficient $\mu_1$ of a relay node $R_1$ may be set to $\mu_1 = C$, and a channel coefficient $\lambda_1$ of a relay node $R_2$ may be set to $\lambda_1 = -h_{s2,u}/h_{v,d1}h_{s2,v}$. The relay nodes $R_1$ and $R_2$ relay the symbols $a_1$ and $b_1$, using channels between the source nodes $S_1$ and $S_2$ and the destination nodes $d_1$ and $d_2$, from which the interference channel between the source node $S_2$ and the destination node $d_1$ is removed. When $\mu_1 = c$ and $\lambda_1 = -ch_{u,d_1}h_{s2,u}/h_{v,d_1}h_{s2,v}$ are substituted to Equation 6, signals received at the destination nodes $d_1$ and $d_2$ in the symbol transmission process 220 may be represented, as shown in Equation 7.

[Equation 7]

$$y_{1,1} = \alpha_{1,1}a_1 + z_{1,1}, \text{ and } y_{2,1} = \underbrace{\alpha_{2,1}a_1 + \beta_{2,1}b_1}_{L_1(a_1,b_1)} + z_{2,1}$$

In Equation 7, $y_{1,1}$ denotes a signal received at the destination node $d_1$ in the symbol transmission process 220, $y_{2,1}$ denotes a signal received at the destination node $d_2$ in the symbol transmission process 220. Based on the above-described conditions (c-1) through (c-3), $\alpha_{1,1}$ and $\beta_{2,1}$ may be nonzero. Additionally, $\alpha_{2,1}a_1 + \beta_{2,1}b_1$ is represented

by $L_1(a_1,b_1)$. $L_1(a_1,b_1)$ is a linear equation in which the symbols $a_1$ and $b_1$ are linearly combined.

In the symbol transmission process 230, the relay nodes $R_1$ and $R_2$ receive symbols $a_2$ and $b_2$ from the source nodes $S_1$ and $S_2$, respectively. $a_2^2$ and $b_2^2$ may be less than or equal to the power constraint P, $\left(a_2^2, b_2^2 \leq P\right)$. Additionally, the relay nodes $R_1$ and $R_2$ remove an interference channel between the source node $S_1$ and the destination node $d_2$, by adjusting the channel coefficients. Accordingly, a channel coefficient $\mu_2$ of the relay node $R_1$ is set to $\mu_2 = c$, and a channel coefficient $\lambda_2$ of the relay node $R_2$ is set to $\lambda_2 = -ch_{u,d_2}h_{s_1,u}/h_{v,d2}h_{s_1,v}$. The relay nodes $R_1$ and $R_2$ relay the symbols $a_2$ and $b_2$, using channels between the source nodes $S_1$ and $S_2$ and the destination nodes $d_1$ and $d_2$, from which the interference channel between the source node $S_1$ and the destination node $d_2$ is removed.

When $\mu_2 = c$ and $\lambda_2 = -ch_{u,d2}h_{s_1,u}/h_{v,d2}h_{s_1,v}$ are substituted to Equation 6, signals received at the destination nodes $d_1$ and $d_2$ in the symbol transmission process 230 are represented, as shown in Equation 8.

[Equation 8]

$$y_{1,2} = \underbrace{\alpha_{1,2}a_2 + \beta_{1,2}b_2}_{L_2(a_2,b_2)} + z_{1,2}, \text{ and } y_{2,2} = \beta_{2,2}b_2 + z_{2,2}$$

In Equation 8, $y_{1,2}$ is a signal received by the destination node $d_1$ in the symbol transmission process 230, $y_{2,2}$ is a signal received by the destination node $d_2$ in the symbol transmission process 230. Based on the above-described conditions (c-1) through (c-3), $\alpha_{1,2}$ and $\beta_{2,1}$ may be nonzero. Additionally, $\alpha_{1,2}a_2+\beta_{1,2}b_2$ may be represented by $L_2(a_2,b_2)$. $L_2(a_2,b_2)$ is a linear equation in which the symbols $a_2$ and $b_2$ are linearly combined.

In the symbol transmission process 240, the relay nodes $R_1$ and $R_2$ receive, from the source node $S_1$, a symbol $a_1$ that is identical to the symbol received from the source node $S_1$ in the symbol transmission process 220. Also, the relay nodes $R_1$ and $R_2$ receive, from the source node $S_2$, a symbol $b_2$ that is identical to the symbol received from the source node $S_2$ in the symbol transmission process 230. Accordingly, in the symbol transmission process 240, the destination node $d_1$ receives $L_3(a_1,b_2)$ in which the symbols $a_1$ and $b_2$ are linearly combined, and the symbol $a_1$ is extracted from Equations 7 and 8. The destination node $d_2$ receives $L_4(a_1,b_2)$ , and the symbol $b_1$ is extracted using Equations 7 and 8. The relay nodes $R_1$ and $R_2$ may relay the symbols $a_1$ and $b_2$, using channels between the source nodes and the destination nodes. Accordingly, in the symbol transmission process 240, when the source nodes $S_1$ and $S_2$ transmit the symbols $a_1$ and $b_2$, respectively, when a channel coefficient $\mu_3$ of the relay node $R_1$ is set to c, and when a channel coefficient $\lambda_3$ of the relay node $R_2$ is set to zero, signals received by the destination nodes $d_1$ and $d_2$ may be represented, as shown in Equation 9.

[Equation 9]

$$y_{1,3} = \underbrace{\alpha_{1,3}a_1 + \beta_{1,3}b_2}_{L_3(a_1,b_2)} + z_{1,3}, \quad y_{2,3} = \underbrace{\alpha_{2,3}a_1 + \beta_{2,3}b_2}_{L_4(a_1,b_2)} + z_{2,3}$$

In Equation 9, $y_{1,3}$ denotes the signal received by the destination node $d_1$ in the symbol transmission process 240, and $y_{2,3}$ denotes the signal received at the destination node $d_2$ in the symbol transmission process 240. Based on the above-described conditions (c-1) through (c-3), $\beta_{1,3}$ and $\alpha_{2,3}$ may be nonzero.

Accordingly, when the symbol transmission processes 220 through 240 are performed, the destination node $d_1$ may extract a signal represented, as shown in Equation 10, from the received signals $y_{1,1}$, $y_{1,2}$, $y_{1,3}$. and

[Equation 10]

$$y_1^{a_1} = a_1 + z_{1,1}/\alpha_{1,1}, \qquad \text{and}$$

$$y_1^{a_2} = a_2 + \frac{1}{\alpha_{1,2}}z_{1,2} - \frac{\beta_{1,2}}{\alpha_{1,2}\beta_{1,3}}z_{1,3} + \frac{\alpha_{1,3}\beta_{1,2}}{\alpha_{1,1}\alpha_{1,2}\beta_{1,3}}z_{1,1}$$

In Equation 10, $y_1^{a_1}$ denotes a signal associated with the symbol $a_1$ transmitted from the source node $S_1$, and $y_1^{a_1}$ denotes a signal associated with the symbol $a_2$ transmitted from the source node $S_1$. For example, when $\sigma_1^2$ and $\sigma_2^2$ correspond to a noise variance in the signals $y_1^{a_1}$ and $y_1^{a_2}$, $\sigma_1^2$ and $\sigma_2^2$ depend on the channel coefficients and AF factors. Accordingly, the power constraint P may not change a scale of each of $\sigma_1^2$ and $\sigma_2^2$, and a rate, as defined in Equation 11, may be extracted using a preset outercode.

[Equation 11]

$$R_1 = \frac{1}{6}\left(\log\left(1 + \frac{P}{\sigma_1^2}\right) + \log\left(1 + \frac{P}{\sigma_2^2}\right)\right) \geq \frac{1}{3}\log\frac{P}{\sigma_1\sigma_2}$$

Based on Equation 11, the destination node $d_1$ may achieve 2/3 degrees of freedom (DoF). The destination node $d_2$ may also achieve 2/3 DoF. Accordingly, a sum-DoF of the multi-hop network 210 may be 4/3, which may lead to 33% increase, compared to a time division multiplexing (TDM).

The order of the symbol transmission processes 220 through 240 performed at the relay nodes $R_1$ and $R_2$, the source nodes $S_1$ and $S_2$, and the destination nodes $d_1$ and $d_2$ may be changed without departing from the spirit and scope of the described configurations. In an example, in an opposite order to the above-described order, the symbol transmission processes 220 through 240 may be performed, for example, the symbol transmission processes 240, 230, and 220 may be subsequently and sequentially performed. In another example, when the symbol transmission process 230 is first performed, the symbol transmission processes 240, and 220 may be subsequently and sequentially performed.

Additionally, the symbol transmission processes 220 through 240 may be performed using an orthogonal dimension, for example, an orthogonal time-division multiplexing or a an orthogonal frequency-division multiple access. For example, the symbol transmission processes 220 through 240 may be performed, using multiple subcarriers and multiple subbands in an orthogonal frequency-division multiplexing (OFDM).

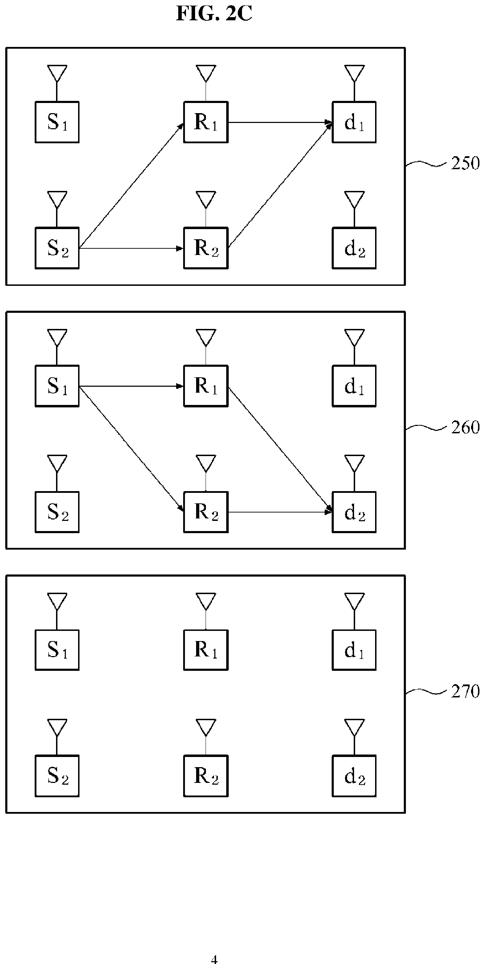

In the interference control scheme in the multi-hop network, the relay nodes may remove an interference channel between the source nodes $S_1$ and $S_2$ and the destination nodes $d_1$ and $d_2$, based on a part of channel information, which will be further described with reference to FIG. 2C.

Referring to FIG. 2C, a symbol transmission process 250 represents feedback of channel information in the symbol transmission process 220 of FIG. 2B. As described in FIG. 2B, in the symbol transmission process 220, the relay nodes $R_1$ and $R_2$ remove the interference channel between the source node $S_2$ and the destination node $d_1$, by adjusting the channel coefficients. The relay nodes $R_1$ and $R_2$ adjust the channel coefficients based on channel information between the source node $S_2$ and the relay nodes $R_1$ and $R_2$, and channel information between the relay nodes $R_1$ and $R_2$ and the destination node $d_1$.

As shown in FIG. 2C, in the symbol transmission process 250, in accord with an embodiment, a relay node $R_1$ receives channel information from the source node $S_2$. The channel information includes information about a channel between the source node $S_2$ and the relay node $R_1$. A relay node $R_2$ receives channel information from the source node $S_2$. The channel information includes information about a channel between the relay node $R_2$ from the source node $S_2$.

The channel information between the source node $S_2$ and the relay node $R_1$, and the channel information between the source node $S_2$ and the relay node $R_2$ may be, for example, channel state information at receiver (CSIR). The relay node $R_1$ estimates channel information between the relay node $R_1$ and a destination node $d_1$, and transmits the estimated channel information to the destination node $d_1$. In turn, the relay node $R_2$ estimates channel information between the relay node $R_2$ and a destination node $d_1$, and transmits the estimated channel information to the destination node $d_1$. The channel information between the relay node $R_1$ and the destination node $d_1$, and the channel information between the relay node $R_2$ and the destination node $d_1$ may be, for example, channel state information at transmitter (CSIT). The relay node $R_1$ receives feedback information from the destination node $d_1$ about the channel information between the relay node $R_1$ and a destination node $d_1$, and the relay node $R_2$ receives feedback information from the destination node $d_1$ about the channel information between the relay node $R_2$ and a destination node $d_1$. The relay nodes $R_1$ and $R_2$ may adjust channel coefficients based on the feedback information, and remove an interference channel between the source node $S_2$ and the destination node $d_1$. Accordingly, in the symbol transmission process 250, the relay nodes $R_1$ and $R_2$ remove the interference channel between the source node $S_2$ and the destination node $d_1$, based on a portion of channel information between the destination node $d_1$ and the relay nodes $R_1$ and $R_2$, instead of being based on all of the channel information between the source node $S_2$, the relay nodes $R_1$ and $R_2$, and the destination node $d_1$. For example, channel information between the source node $S_2$ and the relay nodes $R_1$ and $R_2$, and channel information between the destination node $d_1$ and the relay nodes $R_1$ and $R_2$ may be used.

In the symbol transmission process 230 of FIG. 2B, the relay nodes $R_1$ and $R_2$ remove the interference channel between the source node $S_1$ and the destination node $d_2$, by adjusting the channel coefficients. To adjust the channel coefficients, the relay nodes $R_1$ and $R_2$ use channel information between the source node $S_1$ and the relay nodes $R_1$ and $R_2$, and channel information between the destination node $d_2$ and the relay nodes $R_1$ and $R_2$.

In a symbol transmission process 260, in accord with an embodiment, a relay node $R_1$ receives channel information between the source node $S_1$ and the relay node $R_1$ from the source node $S_1$. A relay node $R_2$ receives channel information between the source node $S_1$ and the relay node $R_2$ from the source node $S_1$. The channel information between the source node $S_1$ and the relay node $R_1$, and the channel information between the source node $S_1$ and the relay node $R_2$ are, for example, CSIR. The relay node $R_1$ estimates channel information between the relay node $R_1$ and a destination node $d_2$, and transmits the estimated channel information to the destination node $d_2$. The relay node $R_2$ estimates channel information between the relay node $R_2$ and a destination node $d_2$, and transmits the estimated channel information to the destination node $d_2$. The channel information between the relay node $R_1$ and the destination node $d_2$, and the channel information between the relay node $R_2$ and the destination node $d_2$ are, for example, CSIT.

The relay node $R_1$ receives feedback information for the channel information between the relay node $R_1$ and a destination node $d_2$ from the destination node $d_2$. The relay node $R_2$ receives feedback information for the channel information between the relay node $R_2$ and a destination node $d_2$ from the destination node $d_2$. The relay nodes $R_1$ and $R_2$ adjust channel coefficients based on the feedback information, and remove an interference channel between the source node $S_1$ and the destination node $d_2$. Accordingly, in the symbol transmission process 260, the relay nodes $R_1$ and $R_2$ remove the interference channel between the source node $S_1$ and the destination node $d_2$, based on a portion of channel information between the destination node $d_2$ and the relay nodes $R_1$ and $R_2$, instead of based on all of the channel information including, for example, channel information between the source node $S_1$ and the relay nodes $R_1$ and $R_2$, and channel information between the destination node $d_2$ and the relay nodes $R_1$ and $R_2$ may be used.

In the symbol transmission process 240 of FIG. 2B, the relay nodes relay at least one symbol using channels between the source nodes $S_1$ and $S_2$ and the destination nodes $d_1$ and $d_2$. In the symbol transmission process 240, the relay nodes $R_1$ and $R_2$ do not remove an interference channel between the source nodes $S_1$ and $S_2$ and the destination nodes $d_1$ and $d_2$. Accordingly, in a third symbol transmission process 270 of FIG. 2C, channel information between the source nodes $S_1$ and $S_2$ and the relay nodes $R_1$ and $R_2$, and channel information between the relay nodes $R_1$ and $R_2$ and the destination nodes $d_1$ and $d_2$ are not required.

In an example in which two node pairs, and two relay nodes are provided, feedback of channel information may be performed periodically, for instance, every three time slots corresponding to the symbol transmission processes 250 through 270. Additionally, for each of the symbol transmission processes 250 through 270, the relay nodes may receive, as feedback, only a part of the channel information and, as a result, uplink throughput is enhanced.

Referring to FIGS. 2A through 2C, in the interference control scheme in the multi-hop network, at least one of the relay nodes may include a processor or controller to remove an interference between the source nodes $S_1$ and $S_2$ and the destination nodes $d_1$ and $d_2$. The at least one of the relay nodes would include a transmitter, the processor, and a receiver to perform the interference control scheme.

Interference control scheme in multi-hop network including three node pairs

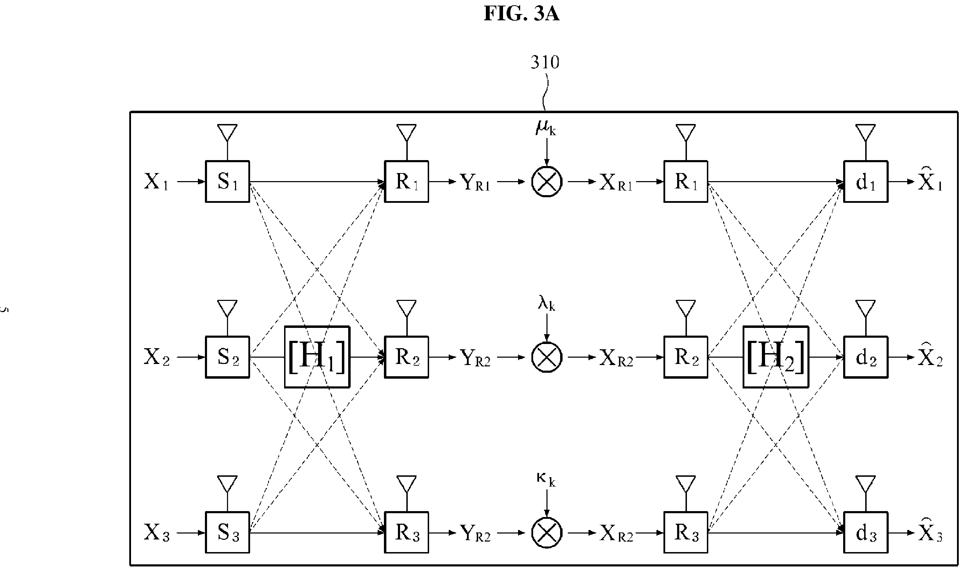

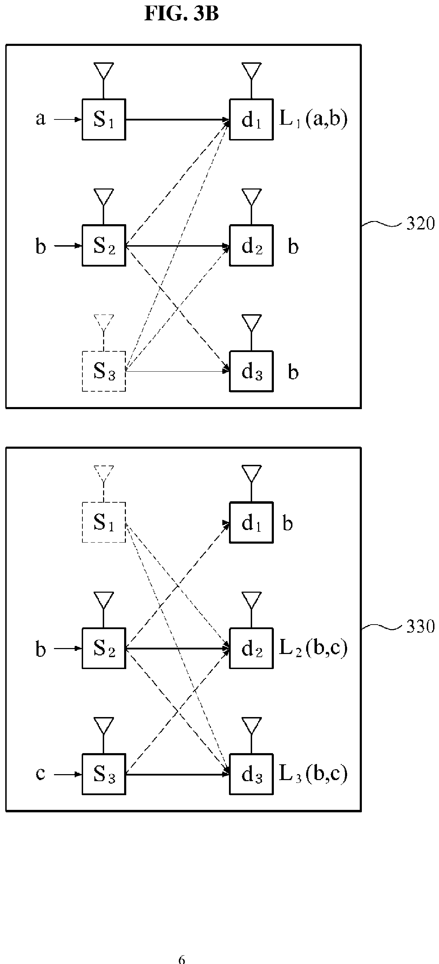

FIGS. 3A and 3B illustrate examples of an interference control scheme in a multi-hop network including three node pairs, in accord with an embodiment.

Referring to FIG. 3A, a multi-hop network 310 includes three source nodes, three destination nodes, and three relay nodes. In an interference control scheme, a larger number of user interference may be controlled, based on an increase in a number of node pairs, and a number of relay nodes. As a result, a topology of the interference control scheme may be more variously changed. Similarly to the interference control scheme of FIGS. 2A through 2C, one of a linear time-varying AF scheme, a linear time-varying QF scheme, a linear time-varying CF scheme, a linear frequency-selecting AF scheme, a linear frequency-selecting QF scheme, and a linear frequency-selecting CF scheme may be used in the interference control scheme of FIGS. 3A and 3B. The following description is provided based on the linear time-varying AF scheme.

In a time slot k, the destination nodes receive signals through a first channel matrix between the source nodes and the relay nodes, channel coefficients of the relay nodes, and a second channel matrix between the relay nodes and the destination nodes, which may be represented, as given in Equation 12 below.

[Equation 12]

$$\underbrace{\begin{bmatrix} \mathbf{h}_2^1 \\ \mathbf{h}_2^2 \\ \mathbf{h}_2^3 \end{bmatrix}}_{\mathbf{H}_2} \begin{bmatrix} \mu_1 & 0 & 0 \\ 0 & \lambda_1 & 0 \\ 0 & 0 & \kappa_1 \end{bmatrix} \underbrace{\begin{bmatrix} \mathbf{h}_1^1 & \mathbf{h}_1^2 & \mathbf{h}_1^3 \end{bmatrix}}_{\mathbf{H}_1}$$

In Equation 12, $\mu_1$ is a channel coefficient of a relay node $R_1$ in a first symbol transmission process, $\lambda_1$ is a channel coefficient of a relay node $R_2$, and $\kappa_1$ is a channel coefficient of a relay node $R_3$. In the interference control scheme in the multi-hop network, an end-to-end channel matrix G is generated using the first channel matrix, the second channel matrix, and the channel coefficients, and an end-to-end channel matrix in the first symbol transmission process

is represented by $\begin{bmatrix} \alpha_{1,1} & \beta_{1,1} & \gamma_{1,1} \\ \alpha_{2,1} & \beta_{2,1} & \gamma_{2,1} \\ \alpha_{3,1} & \beta_{3,1} & \gamma_{3,1} \end{bmatrix}$. Accordingly, the relay nodes may relay at least one symbol from the source nodes to the destination nodes, using the end-to-end channel matrix.

Referring to FIG. 3B, in a symbol transmission process 320, source nodes $S_1$ and $S_2$ transmit symbols a and b, respectively, and a source node $S_3$ does not transmit a symbol. Additionally, relay nodes remove an interference channel between the source node $S_1$ and a destination node $d_2$, and an interference channel between the source node $S_1$ and a destination node $d_3$, by adjusting channel coefficients. Because the source node $S_3$ does not transmit a symbol,

$\alpha_{2,1}$ and $\alpha_{3,1}$ are zero in the end-to-end channel matrix $\begin{bmatrix} \alpha_{1,1} & \beta_{1,1} & \gamma_{1,1} \\ \alpha_{2,1} & \beta_{2,1} & \gamma_{2,1} \\ \alpha_{3,1} & \beta_{3,1} & \gamma_{3,1} \end{bmatrix}$. Accordingly, the channel coefficients in the symbol transmission process 320 are $\begin{bmatrix} \mu_1 \\ \lambda_1 \\ \kappa_1 \end{bmatrix} = \mathrm{null}\left( \begin{bmatrix} \mathbf{h}_2^2 \circ \mathbf{h}_1^{1T} \\ \mathbf{h}_2^3 \circ \mathbf{h}_1^{1T} \end{bmatrix} \right)$. A symbol $\circ$ represents an element-wise multiplier. Accordingly, a signal received at a destination node $d_1$ is $L_1(a,b)$ in which the symbols a and b are linearly combined, a signal received at the destination node $d_2$ is the symbol b, and a signal received at the destination node $d_3$ is also the symbol b.

In a symbol transmission process 330, source nodes $S_2$ and $S_3$ transmit symbols b and c, respectively, and a source node $S_1$ does not transmit a symbol. Additionally, relay nodes remove an interference channel between the source node $S_3$ and the destination node $d_1$, by adjusting channel coefficients. For example, the channel coefficients in

$$\begin{bmatrix} \mu_2 \\ \lambda_2 \\ \kappa_2 \end{bmatrix} = \text{null}\left(\mathbf{h}_2^1 \circ \mathbf{h}_1^{3,T}\right)$$

the symbol transmission process 330 are adjusted to ⎯⎯⎯⎯⎯⎯⎯⎯⎯⎯⎯ . Accordingly, a signal received at the destination node $d_1$ is the symbol b, a signal received at the destination node $d_2$ is $L_2(b,c)$ in which the symbols b and c are linearly combined, and a signal received at a destination node $d_3$ is $L_3(b,c)$ in which the symbols b and c are linearly combined. The destination node $d_1$ extracts the symbol a from $L_1(a,b)$, because the destination node $d_1$ receives $L_1(a,b)$ in the symbol transmission process 320 and receives the symbol b in the symbol transmission process 330. Similarly, the destination node $d_3$ extracts the symbol c from $L_3(b,c)$, because the destination node $d_3$ receives the symbol b in the symbol transmission process 320 and receives $L_3(b,c)$ in the symbol transmission process 330. Additionally, the destination nodes $d_1$, $d_2$, and $d_3$ extract symbols transmitted by the source nodes $S_1$, $S_2$, and $S_3$, based on signals received from the relay nodes. The destination node $d_2$ receives the symbol b in the symbol transmission process 320.

Through the symbol transmission processes 320 and 330, each of the destination nodes $d_1$, $d_2$ and $d_3$ achieve 1/2 DoF. Accordingly, a sum-DoF of the multi-hop network 310 is 3/2, which may lead to 50% increase, compared to TDM, and is equal to a DoF of an interference alignment (IA) scheme.

Similarly to the example of the two node pairs, the order of the symbol transmission processes 320 and 330 may be changed without departing from the spirit and scope of the described configurations.

Referring to FIGS. 3A through 3B, in the interference control scheme in the multi-hop network, at least one of the relay nodes may include a processor or controller to remove an interference between the source nodes $S_1$, $S_2$, and $S_3$ and the destination nodes $d_1$, $d_2$, and $d_3$. The at least one of the relay nodes would include a transmitter, the processor, and a receiver to perform the interference control scheme.

Interference control scheme using classification of signals in multi-hop network

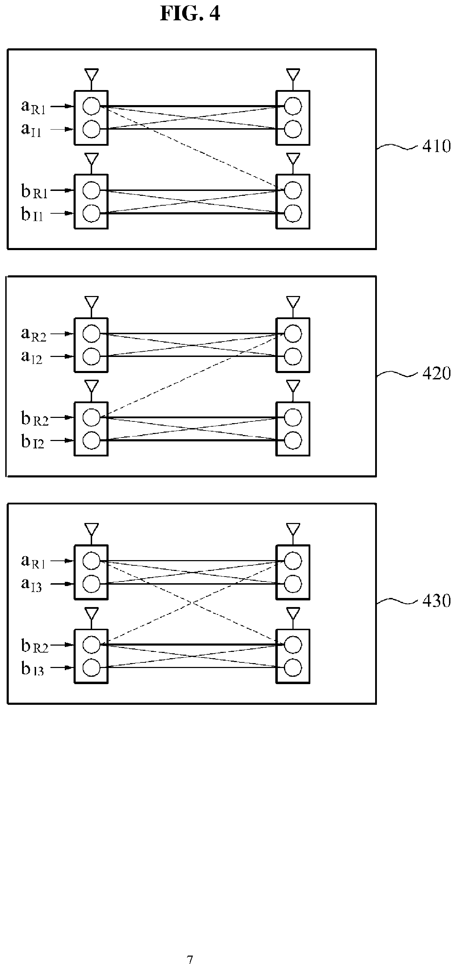

FIG. 4 illustrates an example of an interference control scheme using classification of signals in a multi-hop network, in accord with an embodiment.

Referring to FIG. 4, a relay node receives a symbol from each source node among node pairs, and relays the received symbol to each destination node pairing up with the source nodes. For example, a source node may classify symbols into real number component symbols and imaginary number component symbols, and may transmit the classified symbols to a destination node pairing up with the source node. In this example, a relay node may relay the real number component symbols and the imaginary number component symbols to the destination node. A signal received by the destination node may be represented, as shown in Equation 13.

[Equation 13]

$$\begin{bmatrix} Y_R \\ Y_I \end{bmatrix} = \begin{bmatrix} h_R & -h_I \\ h_I & h_R \end{bmatrix} \begin{bmatrix} X_R \\ X_I \end{bmatrix} + \begin{bmatrix} n_R \\ n_I \end{bmatrix}$$

In Equation 13, $Y_R$ denotes a real number component symbol received at a destination node, $Y_I$ denotes an imaginary number component symbol received at the destination node, $X_R$ denotes a real number component symbol transmitted from a source node, and $X_I$ denotes an imaginary number component symbol transmitted from the source node. Additionally, $\begin{bmatrix} h_R & -h_I \\ h_I & h_R \end{bmatrix}$ indicates a channel matrix between a source node and a destination node, $N_R$ denotes a real number component of a noise signal, and $N_I$ denotes an imaginary number component of a noise signal.

In an example in which two node pairs and two relay nodes are provided, the relay nodes simultaneously receive real number component symbols and imaginary number component symbols from source nodes. The relay nodes also relay the real number component symbols, and the imaginary number component symbols to destination nodes by adjusting channel coefficients. The destination nodes receive signals from the relay nodes, and extract the real number component symbols, and the imaginary number component symbols based on the received signals. In an example, through a symbol transmission process, the relay nodes relay the real number component symbols and the imaginary number component symbols to the node pairs. For example, the node pairs and the relay nodes transmit signals from a first symbol transmission process to a third symbol transmission process.

In a symbol transmission process 410, a first source node transmits a real number component symbol $a_{R1}$ and an imaginary number component symbol $a_{I1}$ to a first relay node. A second source node transmits a real number component symbol $b_{R1}$ and an imaginary number component symbol $b_{I1}$ to a second relay node. By adjusting a channel coefficient, the first relay node relays the received real number component symbol $a_{R1}$, and the received imaginary number component symbol $a_{I1}$ to a first destination node and a second destination node. In addition, by adjusting the channel coefficient, the second relay node relays the received real number component symbol $b_{R1}$, and the received imaginary number component symbol $b_{I1}$ to the first destination node and the second destination node.

For example, the first relay node and the second relay node adjust the channel coefficients and, among all interference channels, enable an interference channel for the real number component symbol $a_{R1}$ between the first source node and the second destination node. The first relay node and the second relay node remove the other interference channels. The first relay node and the second relay node relay the real number component symbols $a_{R1}$ and $b_{R1}$ and the imaginary number component symbols $a_{I1}$ and $b_{I1}$ from the first source node and the second source node to the first destination node and the second destination node. The first relay node and the second relay node relay the real number component symbols $a_{R1}$ and $b_{R1}$ and the imaginary number component symbols $a_{I1}$ and $b_{I1}$ using channels other than the removed interference channels.

In a symbol transmission process 420, a first source node transmits a real number component symbol $a_{R2}$, and an imaginary number component symbol $a_{I2}$ to a first relay node. A second source node transmits a real number component symbol $b_{R2}$ and an imaginary number component symbol $b_{I2}$ to a second relay node. The first relay node relays the received real number component symbol $a_{R2}$, and the received imaginary number component symbol $a_{I2}$ to a first destination node and a second destination node by adjusting a channel coefficient. The second relay node relays the received real number component symbol $b_{R2}$ and the received imaginary number component symbol $b_{I2}$ to the first destination node and the second destination node by adjusting a channel coefficient. For example, the first relay node and the second relay node adjust the channel coefficients and, among all interference channels, enable an interference channel for the real number component symbol $b_{R2}$ between the second source node and the first destination node. The first relay node and the second relay node remove the other interference channels. Using channels other than the removed interference channels, the first relay node and the second relay node relay the real number component symbols $a_{R2}$ and $b_{R2}$ and the imaginary number component symbols $a_{I2}$ and $b_{I2}$ from the first source node and the second source node to the first destination node and the second destination node.

In a symbol transmission process 430, a first source node transmits a real number component symbol $a_{R1}$ and an imaginary number component symbol $a_{I3}$ to a first relay node. A second source node transmits a real number component symbol $b_{R2}$, and an imaginary number component symbol $b_{I3}$ to a second relay node. The first relay node adjusts a channel coefficient and relays the received real number component symbol $a_{R1}$ and the received imaginary number component symbol $a_{I3}$ to a first destination node and a second destination node. The second relay node adjusts a channel coefficient and relays the received real number component symbol $b_{R2}$ and the received imaginary number component symbol $b_{I3}$ to the first destination node and the second destination node. For example, the first relay node and the second relay node adjust the channel coefficients and enable an interference channel, among all intereference channels, for the real number component symbol $a_{R1}$ between the first source node and the second destination node. The first relay node and the second relay node also enable an interference channel, among all interference channels, for the real number component symbol $b_{R2}$ between the second source node and the first destination node. The first relay node and the second relay node remove the other interference channels. Using channels other than the removed interference channels, the first relay node, and the second relay node relay the real number component symbols $a_{R1}$ and $b_{R2}$, and the imaginary number component symbols $a_{I3}$ and $b_{I3}$ from the first source node and the second source node to the first destination node and the second destination node.

Method of controlling interference in relay nodes in multi-hop network

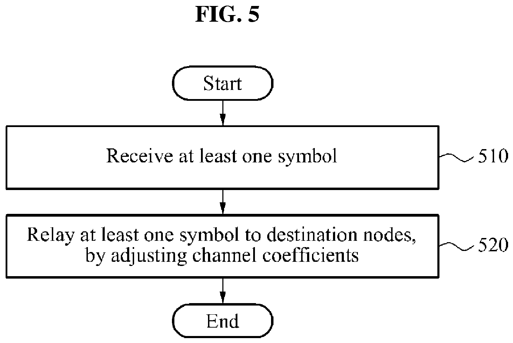

FIG. 5 illustrates an example of a method of controlling interference in relay nodes in a multi-hop network, in accord with an embodiment.

Referring to FIG. 5, at operation 510, in response to node pairs simultaneously transmitting at least one symbol, the method at relay nodes receives the at least one symbol from source nodes. The node pairs may be represented as K node pairs, and the at least one symbol may be represented as N symbols. In the method of FIG. 5, the at least one symbol is relayed from the relay nodes through at least one symbol transmission process. The at least one symbol transmission process may be represented as M symbol transmission processes. M indicates a number of symbol transmission processes equal to or greater than N indicating a number of the symbols transmitted from the K node pairs. The M symbol transmission processes correspond to M time slots. Accordingly, each of the at least one symbol transmission process may be performed over time. Additionally, the M symbol transmission processes may correspond to M frequency bands. For example, each of the at least one symbol transmission process are performed using multiple subcarriers and multiple subbands in an OFDM.

In an example, the method receives at the relay nodes the at least one symbol from the source nodes using a channel matrix between the relay nodes and the source nodes.

In another example, the method simultaneously receives at the relay nodes a real number component symbol and an imaginary number component symbol from the source nodes.

At operation 520, the method adjusts the channel coefficients at the relay nodes and relays the at least one symbol from the source nodes to destination nodes. The method may adjust the channel coefficients based on the M symbol transmission processes. In an example, the method uses one of an amplify-and-forward (AF) scheme, a quantize-and-forward (QF) scheme, and a compute-and-forward (CF) scheme based on the channel coefficients. In the AF scheme, the method amplifies a source signal using power scaling, and forwards the amplified source signal to a destination node. In the QF scheme, the method quantizes and compresses a source signal and forwards the compressed source signal. Additionally, in the CF scheme, the method generates a new signal based on a source signal using a lattice code, and forwards the new signal to a destination node.

In an example, method relays from the relay nodes at least one symbol, using channels between node pairs and the relay nodes. The method at the relay nodes removes at least one interference channel, from among channels between source nodes and destination nodes, by adjusting channel coefficients. In this example, the method receives at relay nodes channel information between the relay nodes and at least one source node among the source nodes from the at least one source node. The method also transmits channel information between the relay nodes and at least one destination node among the destination nodes to the at least one destination node. Additionally, the method receives feedback information at the relay nodes for the channel information between the relay nodes and the at least one destination node from the at least one destination node, adjusts the channel coefficients based on the received feedback information, and removes the at least one interference channel.

Using the channels between the source nodes and the destination nodes, the method relays from the relay nodes the at least one symbol from which the at least one interference channel is removed.

In another example, the method generates at the relay nodes an end-to-end channel matrix, using a first channel matrix between the source nodes and the relay nodes, a second channel matrix between the relay nodes and the destination nodes, and the channel coefficients. The method may also relay at least one symbol from the source nodes to the destination nodes, using the end-to-end channel matrix.

For example, when two node pairs are provided, the method relays from the relay nodes at least one symbol through a first symbol transmission process through a third symbol transmission process.

In the first symbol transmission process, the method removes at the relay nodes an interference channel between a second source node and a first destination node, and relays at least one symbol. For example, the method receives at the relay nodes channel information between the second source node and the relay nodes from the second source node, and transmits channel information between the relay nodes and the first destination node to the first destination node. Additionally, the method receives at the relay nodes feedback information for the channel information between the relay nodes and the first destination node from the first destination node, adjusts the channel coefficients based on the received feedback information, and removes the interference channel between the second source node and the first destination node.

In a second symbol transmission process, the method receives at the relay nodes an interference channel between a first source node and a second destination node, and may relay at least one symbol. For example, the method receives at the relay nodes channel information between the first source node and the relay nodes from the first source node, and transmits channel information between the relay nodes and the second destination node to the second destination node. Additionally, the method receives at the relay nodes feedback information for the channel information between the relay nodes and the second destination node from the second destination node, adjusts the channel coefficients based on the received feedback information, and removes the interference channel between the first source node and the second destination node.

In the third symbol transmission process, the method relays at the relay nodes at least one symbol, using channels between source nodes and destination nodes. For example, from the first source node, the method receives at the relay nodes a symbol that is identical to a symbol received from the first source node in the first symbol transmission process. Additionally, from the second source node, the method receives at the relay nodes a symbol that is identical to a symbol received from the second source node in the second symbol transmission process.

For example, when three node pairs are provided, the method at the relay nodes relays at least one symbol through a first symbol transmission process and a second symbol transmission process.

In the first symbol transmission process, the method at the relay nodes removes an interference channel between a first source node and a second destination node, and an interference channel between the first source node and a third destination node, and relays at least one symbol. The method at the relay nodes receives at least one symbol from each of the first source node and a second source node.

In the second symbol transmission process, the method at the relay nodes relays at least one symbol using channels between source nodes and destination nodes. For example, the method at the relay nodes receives at least one symbol from each of the second source node and a third source node.

In still another example, the method at the relay nodes relays a real number component symbol and an imaginary number component symbol to the destination nodes by adjusting the channel coefficients.

The above description with reference to FIGS. 1 through 4 may equally be applied to the method of FIG. 5 and accordingly, further description of the method is omitted herein.

Method of controlling interference in node pairs in multi-hop network

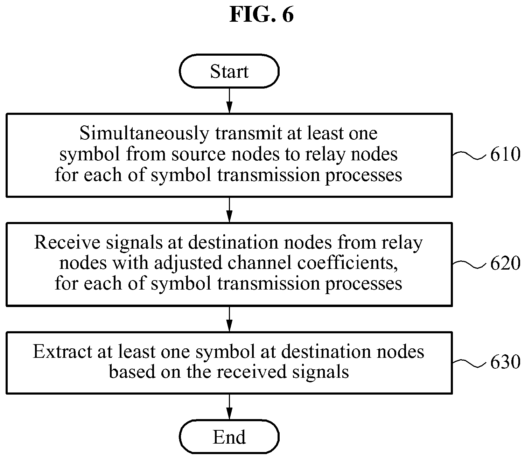

FIG. 6 illustrates an example of a method of controlling interference in node pairs in a multi-hop network, in accord with an embodiment.

Referring to FIG. 6, at operation 610, the method simultaneously transmits from source nodes to relay nodes at least one symbol for each of symbol transmission processes. For example, M, which indicates a number of the symbol transmission processes, may be equal to or greater than N, which indicates a number of symbols transmitted by K node pairs. Additionally, M symbol transmission processes may correspond to M time slots, and may also correspond to M frequency bands.

In an example, the method simultaneously transmits from the source nodes a real number component symbol and an imaginary number component symbol to the relay nodes for each of the symbol transmission processes.

At operation 620, for each of the symbol transmission processes, the method receives at the destination nodes signals from the relay nodes with adjusted channel coefficients.

At operation 630, the method extracts at the destination nodes at least one symbol based on the received signals. For example, for each of the M symbol transmission processes the method extracts or decodes the N symbols transmitted by the source nodes pairing up with the destination nodes based on the received signals.

In an example, the method extracts at the destination nodes a real number component symbol and an imaginary number component symbol based on the received signals.

The above description with reference to FIGS. 1 through 4 may equally be applied to the method of FIG. 6 and accordingly, further description of the method is omitted herein.

The source nodes, the relay nodes, and the destination nodes described herein may be implemented using hardware components. For example, the hardware components may include processing devices, controllers, microphones, amplifiers, band-pass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

It is to be understood that in the embodiment of the present invention, the operations in FIGS. 5-6 are performed in the sequence and manner as shown although the order of some operations and the like may be changed without departing from the scope of the described configurations. In accordance with an illustrative example, a computer program embodied on a non-transitory computer-readable medium may also be provided, encoding instructions to perform at least the method described in FIGS. 5-6.

Program instructions to perform a method described in FIGS. 5-6, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein may be easily construed by programmers skilled in the art to which the embodiments pertain based on and using the flow diagrams and block diagrams of the figures and their corresponding descriptions as provided herein.

As a non-exhaustive illustration only, a terminal or device described herein may refer to mobile devices such as a cellular phone, a personal digital assistant (PDA), a digital camera, a portable game console, and an MP3 player, a portable/personal multimedia player (PMP), a handheld e-book, a portable laptop PC, a global positioning system (GPS) navigation, a tablet, a sensor, and devices such as a desktop PC, a high definition television (HDTV), an optical disc player, a setup box, a home appliance, and the like that are capable of wireless communication or network communication consistent with that which is disclosed herein.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. A method to control interference in a relay node, comprising:

    (Si); simultaneously receiving at least one symbol ($W_i$) from each of a number of source nodes
    adjusting channel coefficients; and
    relaying the at least one symbol ($W_i$) to each of a number of destination nodes ($d_i$) with adjusted channel coefficients,
    wherein the simultaneously receiving and the relaying are performed during symbol transmission processes between the source nodes ($S_i$) and the destination nodes ($d_i$),
    **characterized by**
    generating alternating topologies different for each of a plurality of symbol transmission processes;
    relaying the at least one symbol ($W_i$) through channels between the source nodes ($S_i$) and the destination nodes ($d_i$) using the alternating topologies;
    removing an interference channel from among the channels between the source nodes ($S_i$) and the destination nodes ($d_i$) by adjusting the channel coefficients using the alternating topologies; and
    relaying the at least one symbol ($W_i$), using the channels between the source nodes ($S_i$) and the destination nodes ($d_i$) from which the interference channel is removed.

2. The method of claim 1, wherein the number of symbol transmission processes (M) is equal to or greater than the number of symbols (N) simultaneously received.

3. The method of claim 1 or 2, wherein the relaying of the at least one symbol ($W_i$) comprises using one of an amplify-and-forward, AF, scheme, a quantize-and-forward, QF, scheme, and a compute-and-forward, CF, scheme, based on the channel coefficients.

4. The method of claim 1, 2 or 3 wherein each of the plurality of symbol transmission processes corresponds to a time slot or each of the plurality of symbol transmission processes corresponds to a frequency band.

5. The method of any preceding claim, wherein the removing of the interference channel comprises:

    receiving, from a source node among the source nodes ($S$;), channel information between the source node and relay nodes (u, v);
    transmitting channel information between the relay nodes (u, v) and a destination node among the destination nodes ($d_i$) to the destination node;
    receiving feedback information for the channel information between the relay nodes (u, v) and the destination node from the destination node; and
    adjusting the channel coefficients based on the feedback information and removing the interference channel.

6. The method of any of the claims 1-4, wherein the relaying of the at least one symbol ($W_i$) comprises relaying the at least one symbol ($W_i$) through channels between the source nodes ($S_i$) and the destination nodes ($d_i$), and the relaying of the at least one symbol ($W_i$) further comprises:

    generating an end-to-end channel matrix, using a first channel matrix between the source nodes ($S_i$) and relay nodes (u, v), a second channel matrix between the relay nodes (u, v) and the destination nodes ($d_i$), and the channel coefficients; and
    relaying the at least one symbol ($W_i$) from the source nodes ($S_i$) to the destination nodes ($d_i$) using the end-to-end channel matrix.

7. The method of any preceding claim, wherein, in response to two source nodes and two destination nodes being provided, the receiving, and the relaying are performed during a first symbol transmission process, a second symbol transmission process, and a third symbol transmission process, wherein preferably the relaying of the at least one

symbol ($W_i$) comprises:

in the first symbol transmission process, relaying the at least one symbol ($W_i$) by removing an interference channel between a second source node and the first destination node;
in the second symbol transmission process, relaying the at least one symbol ($W_i$) by removing an interference channel between the first source node and a second destination node; and
in the third symbol transmission process, relaying the at least one symbol ($W_i$), using channels between the source nodes ($S_i$) and the destination nodes ($d_i$).

8. The method of claim 7, wherein, in the third symbol transmission process, the receiving of the at least one symbol ($W_i$) comprises:

receiving a symbol from the first source node, the symbol being identical to a symbol received from the first source node in the first symbol transmission process; and
receiving a symbol from the second source node, the symbol being identical to a symbol received from the second source node in the second symbol transmission process.

9. The method of claim 7 or 8, wherein the relaying of the at least one symbol ($W_i$) in the first symbol transmission process comprises:

receiving channel information between the second source node and relay nodes (u, v) from the second source node;
transmitting channel information between the relay nodes (u, v) and the first destination node to the first destination node;
receiving feedback information for the channel information between the relay nodes (u, v) and the first destination node from the first destination node;
adjusting the channel coefficients based on the feedback information; and
removing the interference channel between the second source node and the first destination node.

10. The method of claim 7, 8 or 9, wherein the relaying of the at least one symbol ($W_i$) in the second symbol transmission process comprises:

receiving channel information between the first source node and relay nodes (u, v) from the first source node;
transmitting channel information between the relay nodes (u, v) and the second destination node to the second destination node;
receiving feedback information for the channel information between the relay nodes (u, v) and the second destination node from the second destination node;
adjusting the channel coefficients based on the feedback information; and
removing the interference channel between the first source node and the second destination node.

11. The method of any preceding claim, wherein, in response to three source nodes ($S_i$) and three destination nodes ($d_i$) being provided, the receiving and the relaying are performed during a first symbol transmission process and a second symbol transmission process, wherein preferably the relaying of the at least one symbol ($W_i$) comprises:

in the first symbol transmission process, relaying the at least one symbol ($W_i$) by removing an interference channel between the first source node and a second destination node, and an interference channel between the first source node and a third destination node; and
in the second symbol transmission process, relaying the at least one symbol ($W_i$) using channels between the source nodes ($S_i$) and the destination nodes ($d_i$).

12. The method of claim 11, wherein the receiving of the at least one symbol ($W_i$) comprises:

in the first symbol transmission process, receiving the at least one symbol ($W_i$) from each of the first source node and the second source node; and
in the second symbol transmission process, receiving the at least one symbol ($W_i$) from each of the second source node and a third source node.

13. The method of any preceding claim, comprising:

simultaneously receiving a real number component symbol and an imaginary number component symbol from source nodes ($S_i$); and

relaying the real number component symbol and the imaginary number component symbol to destination nodes ($d_i$) with adjusted channel coefficients,

wherein the simultaneously receiving and the relaying are performed during a symbol transmission process between the source and destination nodes ($d_i$).

14. An apparatus to control interference, comprising:

a relay node ($R_i$) configured to simultaneously receive at least one symbol ($W_i$) from each of a number of source nodes ($S_i$), adjust channel coefficients, and relay the at least one symbol ($W_i$) to each a number of destination nodes ($d_i$) with adjusted channel coefficients, wherein the relay node ($R_i$) is configured to simultaneously receive and to relay the at least one symbol ($W_i$) during symbol transmission processes between the source nodes ($S_i$) and the destination nodes ($d_i$),

**characterized in that** the relay node ($R_i$) is further configured to:

generate alternating topologies different for each of a plurality of symbol transmission processes;
relay the at least one symbol ($W_i$) through channels between the source nodes ($S_i$) and the destination nodes ($d_i$) using the alternating topologies;
remove an interference channel from among the channels between the source nodes ($S_i$) and the destination nodes ($d_i$) by adjusting the channel coefficients using the alternating topologies; and
relay the at least one symbol ($W_i$), using the channels between the source nodes ($S_i$) and the destination nodes ($d_i$) from which the interference channel is removed.

15. Apparatus of claim 14, further comprising:
a destination node configured to decode all the symbols using signals received from interference channels for each of the plurality of symbol transmission processes.

**Patentansprüche**

1. Verfahren zur Steuerung der Interferenz in einem Relaisknoten, wobei das Verfahren Folgendes umfasst:

gleichzeitiges Empfangen wenigstens eines Symbols ($W_i$) aus jedem von einer Anzahl von Quellknoten ($S_i$);
Einstellen von Kanalkoeffizienten; und
Weiterleiten des wenigstens einen Symbols ($W_i$) an jeden aus einer Anzahl von Zielknoten ($d_i$) mit eingestellten Kanalkoeffizienten,
wobei das gleichzeitige Empfangen und das Weiterleiten während Symbolübertragungsvorgängen zwischen den Quellknoten ($S_i$) und den Zielknoten ($d_i$) durchgeführt werden,
**gekennzeichnet durch**
Erzeugen abwechselnder Topologien, die für jeden aus einer Vielzahl von Symbolübertragungsvorgängen unterschiedlich sind;
Weiterleiten des wenigstens einen Symbols ($W_i$) durch sich zwischen den Quellknoten (Si) und den Zielknoten (di) befindende Kanäle unter Verwendung der abwechselnden Topologien;
Entfernen eines Interferenzkanals unter den sich zwischen den Quellknoten (Si) und den Zielknoten (di) befindenden Kanälen durch Einstellen der Kanalkoeffizienten unter Verwendung der abwechselnden Topologien; und
Weiterleiten des wenigstens einen Symbols ($W_i$) unter Verwendung der sich zwischen den Quellknoten (Si) und den Zielknoten (di) befindenden Kanäle, von denen der Interferenzkanal entfernt wurde.

2. Verfahren nach Anspruch 1, wobei die Anzahl von Symbolübertragungsvorgängen (M) größer oder gleich der Anzahl von gleichzeitig empfangenen Symbolen (N) ist.

3. Verfahren nach Anspruch 1 oder 2, wobei das Weiterleiten des wenigstens einen Symbols ($W_i$) Folgendes umfasst:
basierend auf den Kanalkoeffizienten, Verwenden eines aus einem Amplify-and-Forward (AF) -Schema, einem Quantize-and-Forward (QF) -Schema und einem Compute-and-Forward (CF) -Schema.

4. Verfahren nach Anspruch 1, 2 oder 3, wobei jeder aus der Vielzahl von Symbolübertragungsvorgängen einem Zeitfenster entspricht oder jeder aus der Vielzahl von Symbolübertragungsvorgängen einem Frequenzband entspricht.

**5.** Verfahren nach einem der vorhergehenden Ansprüche, wobei das Entfernen des Interferenzkanals Folgendes umfasst:

aus einem Quellknoten unter den Quellknoten ($S_i$), Empfangen von Informationen über sich zwischen dem Quellknoten und dem Relaisknoten (u, v) befindende Kanäle;
Übertragen von Informationen über sich zwischen den Relaisknoten (u, v) und einem Zielknoten unter den Zielknoten (di) befindende Kanäle an den Zielknoten;
aus dem Zielknoten, Empfangen von Rückmeldungsinformationen für die Informationen über sich zwischen den Relaisknoten (u, v) und dem Zielknoten befindende Kanäle; und
Einstellen der Kanalkoeffizienten basierend auf den Rückmeldungsinformationen und Entfernen des Interferenzkanals.

**6.** Verfahren nach einem der Ansprüche 1 bis 4, wobei das Weiterleiten des wenigstens einen Symbols ($W_i$) das Weiterleiten des wenigstens einen Symbols ($W_i$) durch sich zwischen den Quellknoten (Si) und den Zielknoten ($d_i$) befindende Kanäle umfasst, und wobei das Weiterleiten des wenigstens einen Symbols ($W_i$) weiterhin Folgendes umfasst:

Erzeugen einer Ende-zu-Ende-Kanalmatrix unter Verwendung einer ersten Kanalmatrix zwischen den Quellknoten ($S_i$) und den Relaisknoten (u, v), einer zweiten Kanalmatrix zwischen den Relaisknoten (u, v) und den Zielknoten ($d_i$), und den Kanalkoeffizienten; und
Weiterleiten des wenigstens einen Symbols ($W_i$) von den Quellknoten ($S_i$) zu den Zielknoten ($d_i$) unter Verwendung der Ende-zu-Ende-Kanalmatrix.

**7.** Verfahren nach einem der vorhergehenden Ansprüche, wobei als Reaktion darauf, dass zwei Quellknoten und zwei Zielknoten bereit gestellt werden, das Empfangen und das Weiterleiten während eines ersten Symbolübertragungsvorgangs, eines zweiten Symbolübertragungsvorgangs und eines dritten Symbolübertragungsvorgangs durchgeführt werden, wobei das Weiterleiten des wenigstens einen Symbols ($W_i$) vorzugsweise Folgendes umfasst:

in dem ersten Symbolübertragungsvorgang, Weiterleiten des wenigstens einen Symbols ($W_i$) durch Entfernen eines Interferenzkanals zwischen einem zweiten Quellknoten und dem ersten Zielknoten;
in dem zweiten Symbolübertragungsvorgang, Weiterleiten des wenigstens einen Symbols ($W_i$) durch Entfernen eines Interferenzkanals zwischen dem ersten Quellknoten und einem zweiten Zielknoten; und
in dem dritten Symbolübertragungsvorgang, Weiterleiten des wenigstens einen Symbols ($W_i$) unter Verwendung von sich zwischen den Quellknoten ($S_i$) und den Zielknoten ($d_i$) befindenden Kanälen.

**8.** Verfahren nach Anspruch 7, wobei das Empfangen des wenigstens einen Symbols ($W_i$) in dem dritten Symbolübertragungsvorgang Folgendes umfasst:

Empfangen eines Symbols aus dem ersten Quellknoten, wobei das Symbol mit einem in dem ersten Symbolübertragungsvorgang aus dem ersten Quellknoten empfangenen Symbol identisch ist; und
Empfangen eines Symbols aus dem zweiten Quellknoten, wobei das Symbol mit einem in dem zweiten Symbolübertragungsvorgang aus dem zweiten Quellknoten empfangenen Symbol identisch ist.

**9.** Verfahren nach Anspruch 7 oder 8, wobei das Weiterleiten des einen Symbols ($W_i$) in dem ersten Symbolübertragungsvorgang Folgendes umfasst:

aus dem zweiten Quellknoten, Empfangen von Informationen über sich zwischen dem zweiten Quellknoten und den Relaisknoten (u, v) befindende Kanäle;
Übertragen von Informationen über sich zwischen den Relaisknoten (u, v) und dem ersten Zielknoten befindende Kanäle an den ersten Zielknoten;
aus dem ersten Zielknoten, Empfangen von Rückmeldungsinformationen für die Informationen über sich zwischen den Relaisknoten (u, v) und dem ersten Zielknoten befindenden Kanäle;
Einstellen der Kanalkoeffizienten basierend auf den Rückmeldungsinformationen; und
Entfernen des Interferenzkanals zwischen dem zweiten Quellknoten und dem ersten Zielknoten.

**10.** Verfahren nach Anspruch 7, 8 oder 9, wobei das Weiterleiten des wenigstens einen Symbols ($W_i$) in dem zweiten

Symbolübertragungsvorgang Folgendes umfasst:

aus dem ersten Quellknoten, Empfangen von Informationen über sich zwischen dem ersten Quellknoten und Relaisknoten (u, v) befindende Kanäle;

Übertragen von Informationen über sich zwischen den Relaisknoten (u, v) und dem zweiten Zielknoten befindende Kanäle an den zweiten Zielknoten;

aus dem zweiten Zielknoten, Empfangen von Rückmeldungsinformationen für die Informationen über sich zwischen den Relaisknoten (u, v) und dem zweiten Zielknoten befindende Kanäle;

Einstellen der Kanalkoeffizienten basierend auf den Rückmeldungsinformationen; und

Entfernen des Interferenzkanals zwischen dem ersten Quellknoten und dem zweiten Zielknoten.

11. Verfahren nach einem der vorhergehenden Ansprüche, wobei als Reaktion darauf, dass drei Quellknoten ($S_i$) und drei Zielknoten ($d_i$) bereit gestellt werden, das Empfangen und das Weiterleiten während eines ersten Symbolübertragungsvorgangs und eines zweiten Symbolübertragungsvorgangs durchgeführt werden, wobei das Weiterleiten des wenigstens einen Symbols ($W_i$) vorzugsweise Folgendes umfasst:

in dem ersten Symbolübertragungsvorgang, Weiterleiten des wenigstens einen Symbols ($W_i$) durch Entfernen eines sich zwischen dem ersten Quellknoten und einem zweiten Zielknoten befindenden Interferenzkanals, und eines sich zwischen dem ersten Quellknoten und einem dritten Zielknoten befindenden Interferenzkanals; und

in dem zweiten Symbolübertragungsvorgang, Weiterleiten des wenigstens einen Symbols ($W_i$) unter Verwendung von Kanälen zwischen den Quellknoten ($S_i$) und den Zielknoten ($d_i$).

12. Verfahren nach Anspruch 11, wobei das Empfangen des wenigstens einen Symbols ($W_i$) Folgendes umfasst:

in dem ersten Symbolübertragungsvorgang, Empfangen des wenigstens einen Symbols ($W_i$) sowohl aus dem ersten Quellknoten als auch aus dem zweiten Quellknoten; und

in dem zweiten Symbolübertragungsvorgang, Empfangen des wenigstens einen Symbols ($W_i$) sowohl aus dem zweiten Quellknoten als auch aus einem dritten Quellknoten.

13. Verfahren nach einem der vorhergehenden Ansprüche, das Folgendes umfasst:

gleichzeitiges Empfangen eines Symbols für eine reale Zahlenkomponente und eines Symbols für eine imaginäre Zahlenkomponente aus Quellknoten ($S_i$); und

Weiterleiten des Symbols für die reale Zahlenkomponente und des Symbols für die imaginäre Zahlenkomponente an Zielknoten ($d_i$) mit eingestellten Kanalkoeffizienten ,

wobei das gleichzeitige Empfangen und das Weiterleiten während eines Symbolübertragungsvorgangs zwischen den Quell- und Zielknoten ($d_i$) durchgeführt werden.

14. Vorrichtung zur Interferenzsteuerung, wobei die Vorrichtung Folgendes umfasst:

einen Relaisknoten ($R_1$), der zu Folgendem konfiguriert ist: gleichzeitiges Empfangen wenigstens eines Symbols ($W_i$) aus jedem von einer Anzahl von Quellknoten ($S_i$); Einstellen von Kanalkoeffizienten, und Weiterleiten des wenigstens einen Symbols ($W_i$) an jeden aus einer Anzahl von Zielknoten ($d_i$) mit eingestellten Kanalkoeffizienten, wobei der Relaisknoten ($R_1$) zu Folgendem konfiguriert ist: gleichzeitiges Empfangen und Weiterleiten des wenigstens einen Symbols ($W_i$) während Symbolübertragungsvorgängen zwischen den Quellknoten ($S_i$) und den Zielknoten ($d_i$),

**dadurch gekennzeichnet, dass** der Relaisknoten ($R_1$) weiterhin zu Folgendem konfiguriert ist:

Erzeugen abwechselnder Topologien, die für jeden aus einer Vielzahl von Symbolübertragungsvorgängen unterschiedlich sind;

Weiterleiten des wenigstens einen Symbols ($W_i$) durch sich zwischen den Quellknoten ($S_i$) und den Zielknoten ($d_i$) befindende Kanäle unter Verwendung der abwechselnden Topologien;

Entfernen eines Interferenzkanals unter den sich zwischen den Quellknoten ($S_i$) und den Zielknoten ($d_i$) befindende Kanäle durch Einstellen der Kanalkoeffizienten unter Verwendung der abwechselnden Topologien; und

Weiterleiten des wenigstens einen Symbols ($W_i$) unter Verwendung der sich zwischen den Quellknoten ($S_i$) und den Zielknoten ($d_i$) befindende Kanäle, von denen der Interferenzkanal entfernt wurde.

**15.** Vorrichtung nach Anspruch 14, die weiterhin Folgendes umfasst:
einen Zielknoten, der dazu konfiguriert ist, für jeden aus der Vielzahl von Symbolübertragungsvorgängen alle Symbole unter Verwendung von Signalen, die aus Interferenzkanälen empfangen wurden, zu decodieren.

**Revendications**

**1.** Procédé de régulation des interférences dans un nœud relais, comprenant :

la réception simultanée d'au moins un symbole ($W_i$) en provenance des nœuds respectifs d'un certain nombre de nœuds sources ($S_i$),
l'ajustement de coefficients de canaux, et
le relayage de l'au moins un symbole ($W_i$) vers les nœuds respectifs d'un certain nombre de nœuds destinations ($d_i$) avec des coefficients de canaux ajustés ;
ladite réception simultanée et ledit relayage étant réalisés au cours de processus de transmission de symbole entre les nœuds sources ($S_i$) et les nœuds destinations ($d_i$),
**caractérisé par**
la génération de topologies en alternance différentes pour chacun des processus d'une pluralité de processus de transmission de symbole ;
le relayage de l'au moins un symbole ($W_i$) par le biais de canaux situés entre les nœuds sources ($S_i$) et les nœuds destinations ($d_i$) au moyen des topologies en alternance ;
l'élimination d'un canal à interférences parmi les canaux situés entre les nœuds sources ($S_i$) et les nœuds destinations ($d_i$) par ajustement des coefficients de canaux au moyen des topologies en alternance ; et
le relayage de l'au moins un symbole ($W_i$), au moyen des canaux situés entre les nœuds sources ($S_i$) et les nœuds destinations ($d_i$) duquel le canal à interférences a été éliminé.

**2.** Procédé selon la revendication 1, dans lequel ledit certain nombre de processus de transmission de symbole (M) est supérieur ou égal audit certain nombre de symboles (N) reçus simultanément.

**3.** Procédé selon la revendication 1 ou 2, dans lequel le relayage de l'au moins un symbole ($W_i$) comprend la mise en œuvre d'une stratégie d'amplification et retransmission (AF, amplify-and-forward), d'une stratégie de quantification et retransmission (QF, quantize-and-forward) ou d'une stratégie calcul et retransmission (CF, compute-and-forward), en fonction des coefficients de canaux.

**4.** Procédé selon la revendication 1, 2 ou 3, dans lequel chacun des processus de la pluralité de processus de transmission de symbole correspond à un créneau temporel ou chacun des processus de la pluralité de processus de transmission de symbole correspond à une bande de fréquences.

**5.** Procédé selon l'une quelconque des revendications précédentes, dans lequel l'élimination du canal à interférences comprend :

la réception, en provenance d'un nœud source parmi les nœuds sources ($S_i$), d'informations concernant les canaux situés entre le nœud source et des nœuds relais (u, v),
la transmission d'informations concernant les canaux situés entre les nœuds relais (u, v) et un nœud destination parmi les nœuds destinations ($d_i$), auprès dudit nœud destination,
la réception, en provenance du nœud destination, d'informations de rétroaction relativement aux informations concernant les canaux situés entre les nœuds relais (u, v) et le nœud destination, et
l'ajustement des coefficients de canaux en fonction des informations de rétroaction, et l'élimination du canal à interférence.

**6.** Procédé selon l'une quelconque des revendications 1 à 4, dans lequel le relayage de l'au moins un symbole ($W_i$) comprend le relayage de l'au moins un symbole ($W_i$) par le biais de canaux situés entre les nœuds sources ($S_i$) et les nœuds destinations ($d_i$), et le relayage de l'au moins un symbole ($W_i$) comprend en outre :

la génération d'une matrice de canal de bout en bout, au moyen d'une première matrice de canal entre les nœuds sources ($S_i$) et les nœuds relais (u, v), d'une deuxième matrice de canal entre les nœuds relais (u, v) et les nœuds destinations ($d_i$), et des coefficients de canaux, et
le relayage de l'au moins un symbole ($W_i$), depuis les nœuds sources ($S_i$) vers les nœuds destinations ($d_i$), au

moyen de la matrice de canal de bout en bout.

7. Procédé selon l'une quelconque des revendications précédentes, dans lequel, en présence de deux nœuds sources et deux nœuds destinations, la réception et le relayage sont réalisés au cours d'un premier processus de transmission de symbole, d'un deuxième processus de transmission de symbole et d'un troisième processus de transmission de symbole, ledit relayage de l'au moins un symbole ($W_i$) comprenant de préférence :

au cours du premier processus de transmission de symbole, le relayage de l'au moins un symbole ($W_i$) par élimination d'un canal à interférences situé entre un deuxième nœud source et le premier nœud destination, au cours du deuxième processus de transmission de symbole, le relayage de l'au moins un symbole ($W_i$) par élimination d'un canal à interférences situé entre le premier nœud source et un deuxième nœud destination, et au cours du troisième processus de transmission de symbole, le relayage de l'au moins un symbole ($W_i$), au moyen de canaux situés entre les nœuds sources ($S_i$) et les nœuds destinations ($d_i$).

8. Procédé selon la revendication 7, dans lequel, au cours du troisième processus de transmission de symbole, la réception de l'au moins un symbole ($W_i$) comprend :

la réception d'un symbole en provenance du premier nœud source, le symbole étant identique à un symbole reçu en provenance du premier nœud source au cours du premier processus de transmission de symbole, et la réception d'un symbole en provenance du deuxième nœud source, le symbole étant identique à un symbole reçu en provenance du deuxième nœud source au cours du deuxième processus de transmission de symbole.

9. Procédé selon la revendication 7 ou 8, dans lequel le relayage de l'au moins un symbole ($W_i$) au cours du premier processus de transmission de symbole comprend :

la réception, en provenance du deuxième nœud source, d'informations concernant les canaux situés entre le deuxième nœud source et des nœuds relais (u, v), la transmission, auprès du premier nœud destination, d'informations concernant les canaux situés entre les nœuds relais (u, v) et le premier nœud destination, la réception, en provenance du premier nœud destination, d'informations de rétroaction relativement aux informations concernant les canaux situés entre les nœuds relais (u, v) et le premier nœud destination, l'ajustement des coefficients de canaux compte tenu des informations de rétroaction, et l'élimination du canal à interférences situé entre le deuxième nœud source et le premier nœud destination.

10. Procédé selon la revendication 7, 8 ou 9, dans lequel le relayage de l'au moins un symbole ($W_i$) au cours du deuxième processus de transmission de symbole comprend :

la réception, en provenance du premier nœud source, d'informations concernant les canaux situés entre le premier nœud source et des nœuds relais (u, v), la transmission, auprès du deuxième nœud destination, d'informations concernant les canaux situés entre les nœuds relais (u, v) et le deuxième nœud destination, la réception, en provenance du deuxième nœud destination, d'informations de rétroaction relativement aux informations concernant les canaux situés entre les nœuds relais (u, v) et le deuxième nœud destination, l'ajustement des coefficients de canaux compte tenu des informations de rétroaction, et l'élimination du canal à interférences situé entre le premier nœud source et le deuxième nœud destination.

11. Procédé selon l'une quelconque des revendications précédentes, dans lequel, en présence de trois nœuds sources ($S_i$) et trois nœuds destinations ($d_i$), la réception et le relayage sont réalisés au cours d'un premier processus de transmission de symbole et d'un deuxième processus de transmission de symbole, ledit relayage de l'au moins un symbole ($W_i$) comprenant de préférence :

au cours du premier processus de transmission de symbole, le relayage de l'au moins un symbole ($W_i$) par élimination d'un canal à interférences situé entre le premier nœud source et un deuxième nœud destination, et d'un canal à interférences situé entre le premier nœud source et un troisième nœud destination, et au cours du deuxième processus de transmission de symbole, le relayage de l'au moins un symbole ($W_i$) au moyen de canaux situés entre les nœuds sources ($S_i$) et les nœuds destinations ($d_i$).

12. Procédé selon la revendication 11, dans lequel la réception de l'au moins un symbole ($W_i$) comprend :

au cours du premier processus de transmission de symbole, la réception de l'au moins un symbole ($W_i$) respectivement en provenance du premier nœud source et du deuxième nœud source, et

au cours du deuxième processus de transmission de symbole, la réception de l'au moins un symbole ($W_i$) respectivement en provenance du deuxième nœud source et d'un troisième nœud source.

13. Procédé selon l'une quelconque des revendications précédentes, comprenant :

la réception simultanée, en provenance de nœuds sources ($S_i$), d'un symbole de composante de nombre réel et d'un symbole de composante de nombre imaginaire, et

le relayage du symbole de composante de nombre réel et du symbole de composante de nombre imaginaire auprès des nœuds destinations ($d_i$) avec des coefficients de canaux ajustés ;

la réception simultanée et le relayage étant réalisés au cours d'un processus de transmission de symbole entre les nœuds sources et les nœuds destinations ($d_i$).

14. Dispositif de régulation des interférences, comprenant :

un nœud relais ($R_1$) conçu pour recevoir simultanément au moins un symbole ($W_i$) en provenance des nœuds respectifs d'un certain nombre de nœuds sources ($S_i$), ajuster des coefficients de canaux, et relayer l'au moins un symbole ($W_i$) vers les nœuds respectifs d'un certain nombre de nœuds destinations ($d_i$) avec des coefficients de canaux ajustés, ledit nœud relais ($R_1$) étant conçu pour recevoir simultanément et pour relayer l'au moins un symbole ($W_i$) au cours de processus de transmission de symbole entre les nœuds sources ($S_i$) et les nœuds destinations ($d_i$),

**caractérisé en ce que** le nœud relais ($R_1$) est conçu en outre pour :

générer des topologies en alternance différentes pour chacun des processus d'une pluralité de processus de transmission de symbole,

relayer l'au moins un symbole ($W_i$) par le biais de canaux situés entre les nœuds sources ($S_i$) et les nœuds destinations ($d_i$) au moyen des topologies en alternance,

éliminer un canal à interférences parmi les canaux situés entre les nœuds sources ($S_i$) et les nœuds destinations ($d_i$) par ajustement des coefficients de canaux au moyen des topologies en alternance, et

relayer l'au moins un symbole ($W_i$), au moyen des canaux situés entre les nœuds sources ($S_i$) et les nœuds destinations ($d_i$) duquel le canal à interférences a été éliminé.

15. Dispositif selon la revendication 14, comprenant en outre :

un nœud destination conçu pour décoder tous les symboles au moyen de signaux reçus en provenance des canaux à interférences pour chacun des processus de la pluralité de processus de transmission de symbole.

**FIG. 1**

EP 2 779 479 B1

**FIG. 2A**

## FIG. 2B

## FIG. 2C

FIG. 3A

## FIG. 3B

# FIG. 4

# FIG. 5

```
           ┌─────────────┐
           │    Start     │
           └──────┬───────┘
                  │
                  ▼
  ┌──────────────────────────────────────┐
  │     Receive at least one symbol       │ ~ 510
  └──────────────────┬───────────────────┘
                     │
                     ▼
  ┌──────────────────────────────────────┐
  │ Relay at least one symbol to destination nodes, │ ~ 520
  │     by adjusting channel coefficients  │
  └──────────────────┬───────────────────┘
                     │
                     ▼
           ┌─────────────┐
           │     End      │
           └─────────────┘
```

# FIG. 6

```
        ┌─────────────┐
        │    Start    │
        └──────┬──────┘
               │
               ▼
┌──────────────────────────────────────┐
│    Simultaneously transmit at least one │
│   symbol from source nodes to relay nodes │──~610
│   for each of symbol transmission processes │
└──────────────────────────────────────┘
               │
               ▼
┌──────────────────────────────────────┐
│  Receive signals at destination nodes from relay │
│    nodes with adjusted channel coefficients,   │──~620
│   for each of symbol transmission processes   │
└──────────────────────────────────────┘
               │
               ▼
┌──────────────────────────────────────┐
│  Extract at least one symbol at destination nodes │──~630
│         based on the received signals          │
└──────────────────────────────────────┘
               │
               ▼
        ┌─────────────┐
        │     End     │
        └─────────────┘
```

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2434660 A1

- EP 2161853 A2